# EUROPEAN PATENT SPECIFICATION

(11) **EP 1 404 036 B1**
(45) Date of publication and mention of the grant of the patent: **30.11.2005**
(21) Application number: 03022191.5
(22) Date of filing: 30.09.2003
(51) Int. Cl.: H04B 10/18, H04B 10/155

(54) **Duobinary optical transmission apparatus**
Duobinäre optische Übertrangungseinrichtung
Dispositif de transmission optique duobinaire

(30) Priority: 30.09.2002 KR 2002059422
(43) Date of publication of application: 31.03.2004
(73) Proprietor: SAMSUNG ELECTRONICS CO., LTD., Suwon-City, Kyungki-do (KR)
(72) Inventor: Lee, Han-Lim, Paldal-gu Suwon-city Kyungki-do (KR); Lee, Gyu-Woong, Paldal-gu Suwon-city Kyungki-do (KR); Oh, Yun-Je, Paldal-gu Suwon-city Kyungki-do (KR); Hwang, Seon-Taek, Paldal-gu Suwon-city Kyungki-do (KR)
(74) Representative: Grünecker, Kinkeldey, Stockmair & Schwanhäusser Anwaltssozietät

(56) References cited:
- EP-A- 0 701 338
- EP-A- 1 128 580
- US-A- 5 867 534

## Description

The present invention relates to a duo-binary optical transmission apparatus.

In general, a dense wavelength division multiplexing (DWDM) optical transmission system can improve transmission efficiency by transmitting an optical signal using a plurality of wavelengths in an optical fiber. It is very useful in an ultrahigh-speed Internet network requiring high transmission capacity as DWDM can transmit optical signals regardless of its transmission speed. However, the enlargement of transmission capacity is restricted due to severe interference and distortion between channels if the channel distance is less than 50GHz when a light intensity is modulated using the conventional non-return-to-zero (NRZ) technique. These drawbacks are increasing due to a rapid growth in data traffic and a demand for high-speed data transmission greater than 40 Gbps in the current trend of the communication fields.

Transmission distance is restricted in high-speed data transmission greater than 10Gbps as a direct current (DC) frequency component of the conventional binary NRZ transmission signal and a high frequency component spread that occurs during the modulation process cause non-linearity and dispersion when the binary NRZ transmission signal propagates in an optical fiber medium.

Recently, an optical duo-binary technology has been suggested as an alternative optical transmission to overcome the restriction of transmission distance caused by the chromatic dispersion. A main advantage of the duo-binary transmission is that the transmission spectrum is reduced in comparison to the general binary transmission. That is, in a dispersion restriction system, a transmission distance is in inverse proportion to the square of the transmission spectrum bandwidth. In other words, when the transmission spectrum is reduced by 1/2, the transmission distance increases four times. Furthermore, as a carrier frequency is suppressed in a duo-binary transmission spectrum, it is possible to relax the restriction of an optical power output caused by the Brillouin scattering that is excited in the optical fiber.

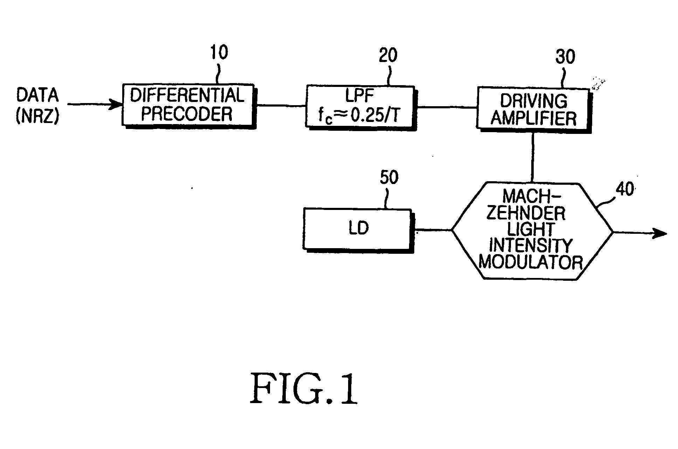

FIG 1 illustrates an example of a a conventional duo-binary optical transmission apparatus. As shown in FIG 1, the conventional duo-binary optical transmission apparatus includes a differential precoder 10 for encoding a 2-level data signal, a low pass filter (LPF) 20, a driving amplifier 30, a Mach-Zehnder interference type light intensity modulator 40, and a laser light source 50 for outputting a carrier. In operation, a NRZ signal to be transmitted is applied to the differential precoder 10 to be encoded, then passes through the electrical LPF 20 to be converted to a 3-level electrical signal. The 3-level electrical signal is amplified by the driving amplifier 30, and the amplified signal is used as a driving signal of the Mach-Zehnder interference type light intensity modulator 40. As such, the phase of the carrier output from the laser light source 50 is changed by the driving signal of the Mach-Zehnder interference type light intensity modulator 40. Finally, the carrier's light intensity is modulated and outputted as an optical duo-binary signal.

According to the conventional structure as described above, where a 2-level data signal passes through the electrical LPF to be converted to a 3-level electrical signal, any difference in the characteristics of output optical signals caused by lengths of a pseudo random bit sequence poses a critical problem in a system. In particular, a system margin is much less in a 2³¹-1 PRBS than in a 2⁷-1 PRBS. In general, a slope when a signal is converted from level 0 into level 1 is different from a slope when a signal is converted from level-1 into level 0. However, in the case of a duo-binary optical transmitter using the electrical LPF, transitions from level 0 to level 1 and from level 1 to level 0 occur in a state where parts having different slopes overlap. Therefore, the jitter of an output waveform increases.

EP-A-1128580 describes an optical transmitter comprising a laser light source, an optical intensity modulator, an electric partial response encoding section which functions as a duobinary encoding circuit, a binary NRZ digital signal source and an optical band pass filter. The electric partial response encoding section receives a binary NRZ encoded signal from the binary NRZ digital signal source. The binary NRZ encoded signal is logically inverted and then converted, by a precoder, into a binary NRZ precoder output signal which is then differentially output from a differential converter. The binary precoder differential output signal is amplified and then input into a low pass filter, so that a three-level complementary electric duobinary encoded signal is obtained and further converted to a three-level duobinary RZ electric signal which is then input into the optical intensity modulator of a MZ type, so that a single mode optical signal from the light source is converted into a binary RZ modulated optical signal, which is then provided to an optical band pass filter.

Accordingly, the present invention has the object to provide a duo-binary optical transmission apparatus that is not affected by the transmission characteristic of pseudo random bit sequences (PRBS).

This object is solved by the invention as claimed in the independent claims.

Preferred embodiments are defined by the dependent claims.

One aspect of the present invention is to provide a duo-binary optical transmission apparatus for transmitting a duo-binary optical signal that has a strong wavelength dispersion without using an electrical low-pass filter (LPF) or a phase modulator.

In one embodiment of the present invention, there is provided a duo-binary optical transmission apparatus including a light source for outputting a light carrier and an optical modulator for inputting a 2-level data signal and outputting a modulated optical signal by modulating the light carrier according to the 2-level data signal.

In another embodiment of the present invention, the optical modulator comprises a code converter for converting the NRZ signal into a 2-level data signal and outputting the 2-level data signal, a driving signal generator for receiving the 2-level data signal and generating a modulator driving signal, a Mach-Zehnder interference type light intensity modulator for receiving the modulator driving signal, converting a phase of the light carrier, and outputting a modulated optical signal by modulating a light intensity, and an optical band pass filter for receiving the modulated optical signal from the Mach-Zehnder interference type light intensity modulator, filtering the modulated optical signal to be suitable for a predetermined band, and outputting a duo-binary optical signal.

In the embodiment, the Mach-Zehnder interference type light intensity modulator is a Z-cut dual armed light intensity modulator.
FIG 1 illustrates an example of a structure of a conventional duo-binary optical transmission apparatus;
FIG 2 is a block diagram illustrating a structure of a first embodiment of a duo-binary optical transmission apparatus according to the present invention;
FIG 3 illustrates modulation processes in the duo-binary optical transmission apparatus according to the present invention;
FIG 4A illustrates a modulation principle in the duo-binary optical transmission apparatus according to the present invention;
FIG 4B illustrates an output waveform of a modulator;
FIG 5 is a block diagram illustrating a structure of a second embodiment of the duo-binary optical transmission apparatuses according to the present invention;
FIG 6 is an output eye diagram of a duo-binary signal modulated to 10Gbps;
FIG 7 is a power spectrum of the duo-binary signal modulated to 10Gbps; and,
FIG 8 is an eye diagram after standard single mode fiber (SSMF) 200km transmission performed by the duo-binary optical transmission apparatus according to the present invention.

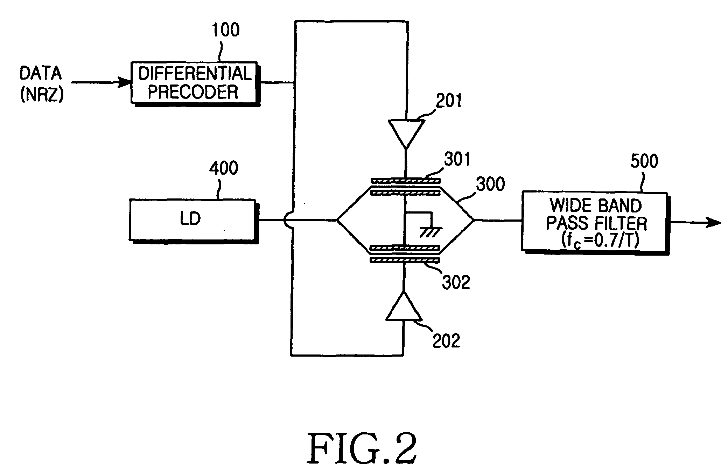

In accordance with the present invention, preferred embodiments of the present invention will be described with reference to the accompanying drawings, FIGs. 2 to 8. In the drawings, the same element, although depicted in different drawings, will be designated by the same reference numeral or character. For the purposes of clarity and simplicity, a detailed description of known functions and configurations incorporated herein will be omitted as it may make the subject matter of the present invention unclear.

FIG 2 is a block diagram illustrating the structure of a first embodiment of a duo-binary optical transmission apparatus according to the present invention. In FIG 2, a differential precoder 100, driving amplifiers 201 and 202, a Mach-Zehnder interference type light intensity modulator 300, and a laser light source 400 for outputting a carrier are provided. In the present embodiment, a structure of a duo-binary optical transmission apparatus including a Z-cut structured chipper free Mach-Zehnder light intensity modulator is illustrated. In this case, a pair of driving amplifiers 201 and 202 for applying 2-level signals on both sides of dual arms 301 and 302 of a modulator are included.

According to the teachings of the present invention, a wide band pass filter 500 is included on the output end of the Mach-Zehnder interference type light intensity modulator 300 in order to generate a duo-binary optical signal after modulating a phase as well as light intensity process using the Mach-Zehnder interference type light intensity modulator 300. Thus, since a 3-level signal is not generated, the characteristics of a signal do not deteriorate according to the length of a pseudo random bit sequence (PRBS).

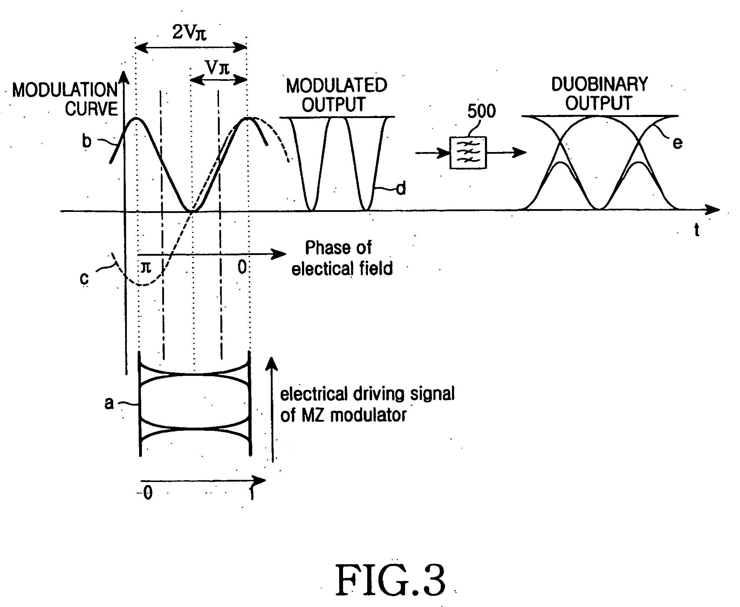

FIG 3 illustrates modulation processes in the duo-binary optical transmission apparatus according to the present invention. The horizontal axis and the vertical axis denote time and modulation, respectively.

As shown in FIG 3, a 2×Vπ applied voltage of a non-return-to-zero (NRZ) signal is applied and a bias point is positioned in the null point of a modulator. In this case, a modulated output waveform d is generated by a light intensity modulation curve b. A duo-binary optical output e having information identical with that of input data is obtained through the wide band pass filter 500. A bit of 0 or 1 is optically outputted at the same magnitude without a change in intensity. However, the bit of 0 or 1 is converted into phase information having a phase difference of 0 or π during modulation in an electrical field c. That is, the phase information becomes information of "π" when the output level of a decoder is 0 and information of "0" when the output level of a decoder is 1. Therefore, a general interference type light intensity modulator can be used as a phase modulator. An optical signal whose phase is modulated through a light intensity modulator passes through a wide band pass filter having the bit ratio of 0.7/T.

The above process performs the same function as that of a method using an electrical low pass filter (LPF) in the structure of the conventional duo-binary transmitter shown in FIG 1. Therefore, an optical signal that passes through the wide band pass filter is converted into the duo-binary optical signal. In the present embodiment, a 2Vπ voltage is applied and a duo-binary signal is generated using a wide band pass filter whose bandwidth is 0.7/bit ratio. The characteristics of an output duo-binary optical signal are controlled by controlling the applied voltage and the bandwidth of the wide band pass filter.

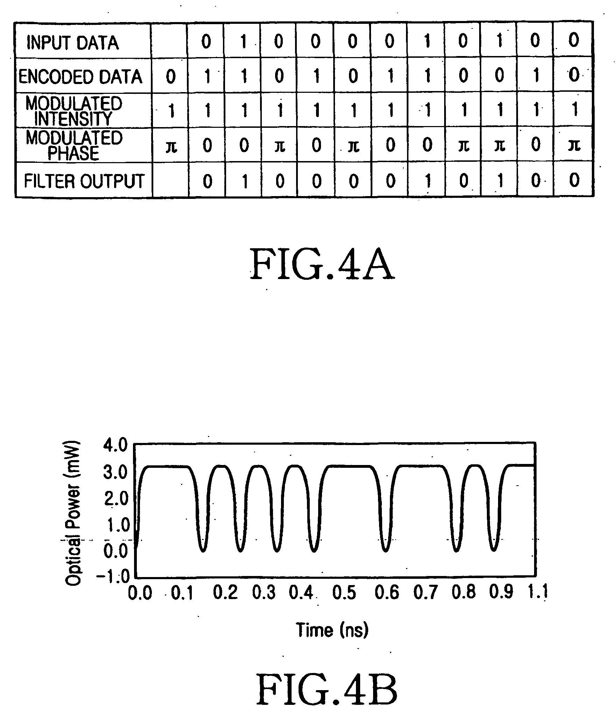

Phase information loaded on the modulated output waveform d of FIG 3 will now be described with reference to FIGs. 4A and 4B. FIG 4A illustrates a modulation principle in the duo-binary optical transmission apparatus according to the present invention. FIG 4B illustrates an output waveform of a modulator.

Referring to FIGs. 4A and 4B, modulated signals are 1-leveled in the moment of determining the signals. Optical outputs of the modulated signals are transited to level 0 and return to level 1 only when applied electrical signals are transmitted from level 1 to level 0 or from level 0 to level 1. The significance is that the optical signals have 1-leveled optical outputs when signals are determined, which is compared with a phase modulator having constant 1-level optical outputs.

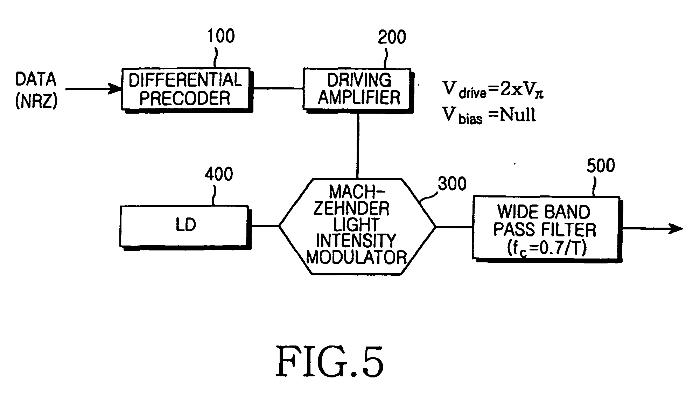

FIG 5 is a block diagram illustrating the structure of a second embodiment of the duo-binary optical transmission apparatus according to the present invention. As shown, an X-cut structured chipper free Mach-Zehnder interference type light intensity modulator 300 is included. In the duo-binary optical transmission apparatus having the Z-cut structured chipper free Mach-Zehnder interference type light intensity modulator, a pair of driving amplifiers 201 and 202 are included so that 2-level signals can be applied by both dual arms 301 and 302 of the modulator. However, in the second embodiment, a single arm is included and a single driving amplifier 200 is included so as to apply a 2-level signal to a direction.

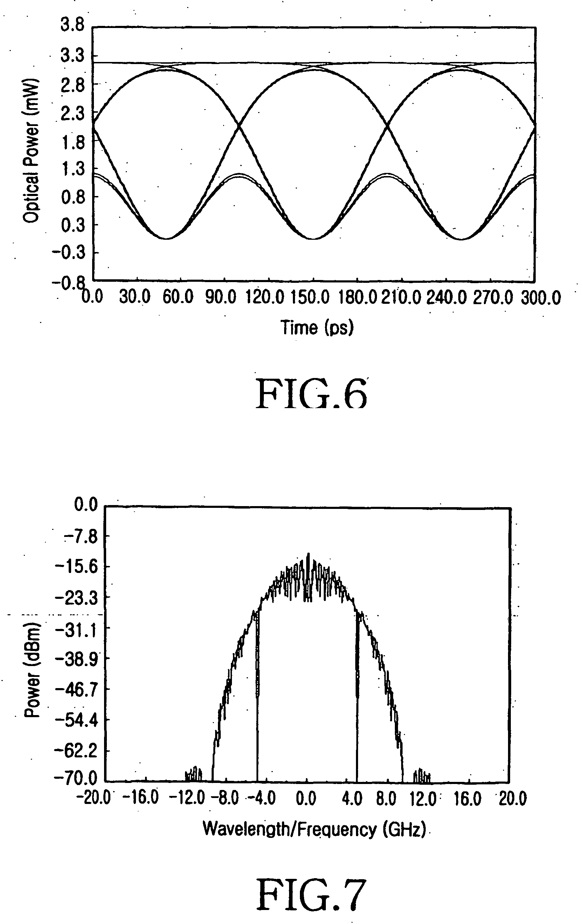

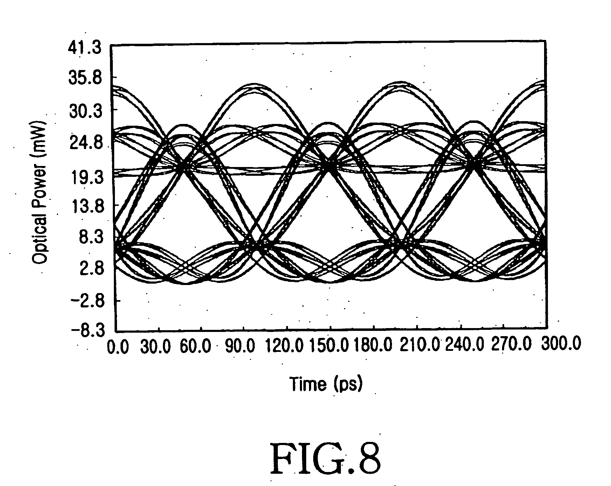

FIGs. 6 to 8 illustrate results obtained from experiments testing the present invention. In particular, FIG 6 is an output eye diagram of a duo-binary optical signal modulated to 10Gbps. FIG 7 illustrates a power spectrum of the duo-binary optical signal modulated to 10Gbps. Note that the above eye diagram and power spectrum are those of a typical duo-binary signal. FIG 8 is an eye diagram after standard single mode fiber (SSMF) 200km transmission performed by the duo-binary optical transmission apparatus according to the present invention, illustrating similar characteristics to those of conventional duo-binary transmission.

As described above, according to the duo-binary optical transmission apparatus, it is possible to prevent the deterioration of the signal quality caused by the length of a pseudo random bit sequence (PRBS) by omitting the electrical LPF. Also, the cost of the duo-binary optical transmission apparatus according to the present invention is tower than that of the conventional duo-binary optical transmission apparatus by 30 to 40% because of the phase modulationand the light intensity using the Mach-Zehnder interference type light intensity modulator. Further, the present invention can be applied to an optical transponder, a transmitter, a transceiver, a SONET/SDH, and an Ethernet transmission system that adopt a duo-binary optical transmission technology.

While the invention has been shown and described with reference to certain preferred embodiments thereof, it will be understood by those skilled in the art that various changes in form and details may be made therein without departing from the scope of the invention as defined by the appended claims. Therefore, this invention is not to be unduly limited to the embodiment set forth herein, but to be defined by the appended claims and equivalents thereof

## Claims

1. A duo-binary optical transmission apparatus, comprising:
a differential precoder (100) for encoding a non-return-to-zero NRZ signal into a 2-level data signal;
a driving amplifier (200) or a pair of driving amplifiers (201, 202) coupled to receive the 2-level data signal of the differential precoder for amplifying the 2-level data signal; and
a laser light source (400) for outputting a light carrier;
**characterized by**
a light intensity modulator (300) coupled to receive the amplified 2-level data signal and the light carrier for modulating the light carrier according to the 2-level data signal; and,
a band pass filter coupled to receive the modulated light carrier of the light intensity modulator to generate a duo-binary optical signal.

2. The duo-binary optical transmission apparatus of claim 1, arranged to vary the characteristic of the output signal of the band pass filter according to a bandwidth of the band pass filter.

3. The duo-binary optical transmission apparatus of claim 1 or 2, wherein the band pass filter is further operative to filter the modulated light signal to be suitable for a predetermined band.

4. The duo-binary optical transmission apparatus of one of claims 1 to 3, wherein the light modulator is further operative to convert a phase of the light carrier.

5. The duo-binary optical transmission apparatus of one of claims 1 to 4, wherein the light intensity modulator is a Z-cut dual armed light intensity modulator.

6. The duo-binary optical transmission apparatus of one of claims 1 to 5, wherein the light intensity modulator is an X-cut dual armed light intensity modulator.

7. A duo-binary optical transmission method comprising steps for operating the duo-binary optical transmission apparatus according to one of claims 1 to 6.

## Patentansprüche

1. Duobinäre optische Übertragungsvorrichtung, die umfasst:
einen Differenz-Precoder (100), der ein Non-Retum-To-Zero (NRZ)-Signal zu einem 2-Ebenen-Datensignal codiert;
einen Treiberverstärker (200) oder ein Paar Treiberverstärker (201, 202), die so gekoppelt sind, dass sie das 2-Ebenen-Datensignal des Differenz-Precoders empfangen, um das 2-Ebenen-Datensignal zu verstärken; und
eine Laserlichtquelle (400), die einen Lichtträger ausgibt;
**gekennzeichnet durch:**
einen Lichtstärkemodulator (300), der so gekoppelt ist, dass er das verstärkte 2-Ebenen-Datensignal und den Lichtträger empfängt, um den Lichtträger entsprechend dem 2-Ebenen-Datensignal zu modulieren; und
ein Bandpassfilter, das so gekoppelt ist, dass es den modulierten Lichtträger des Lichtstärkemodulators empfängt, um ein duobinäres optisches Signal zu erzeugen.

2. Duobinäre optische Übertragungsvorrichtung nach Anspruch 1, die so eingerichtet ist, dass sie die Charakteristik des Ausgangssignals des Bandpassfilters entsprechend einer Bandbreite des Bandpassfilters ändert.

3. Duobinäre optische Übertragungsvorrichtung nach Anspruch 1 oder 2, wobei das Bandpassfilter des Weiteren wirksam ist, um das modulierte Lichtsignal so zu filtern, dass es für ein vorgegebenes Band geeignet ist.

4. Duobinäre optische Übertragungsvorrichtung nach einem der Ansprüche 1 bis 3, wobei der Lichtmodulator des Weiteren wirksam ist, um eine Phase des Lichtträgers umzuwandeln.

5. Duobinäre optische Übertragungsvorrichtung nach einem der Ansprüche 1 bis 4, wobei der Lichtstärkemodulator ein zweiarmiger Z-Schnitt-Lichtstärkemodulator ist.

6. Duobinäre optische Übertragungsvorrichtung nach einem der Ansprüche 1 bis 5, wobei der Lichtstärkemodulator ein zweiarmiger X-Schnitt-Lichtstärkemodulator ist.

7. Duobinäres optisches Übertragungsverfahren, das Schritte zum Betreiben der duobinären optischen Übertragungsvorrichtung nach einem der Ansprüche 1 bis 6 umfasst.

## Revendications

1. Dispositif de transmission optique duobinaire, comportant :
un précodeur différentiel (100) destiné à coder un signal sans retour à zéro NRZ en un signal de données à deux niveaux ;
un amplificateur de commande (200) ou un couple d'amplificateurs de commande (201, 202) couplés pour recevoir le signal de données à deux niveaux issu du précodeur différentiel, destinés à amplifier le signal de données à deux niveaux ; et
une source de lumière laser (400) destinée à produire une porteuse de lumière ;
**caractérisé par** :
un modulateur d'intensité lumineuse (300) couplé pour recevoir le signal de données à deux niveaux amplifié et la porteuse de lumière, destiné à moduler la porteuse de lumière selon le signal de données à deux niveaux ; et
un filtre passe-bande couplé pour recevoir la porteuse de lumière modulée issue du modulateur d'intensité lumineuse afin de produire un signal optique duobinaire.

2. Dispositif de transmission optique duobinaire selon la revendication 1, agencé pour faire varier la caractéristique du signal de sortie du filtre passe-bande selon une largeur de bande du filtre passe-bande.

3. Dispositif de transmission optique duobinaire selon la revendication 1 ou 2, dans lequel le filtre passe-bande sert, en outre, à filtrer le signal lumineux modulé pour qu'il convienne pour une bande prédéterminée.

4. Dispositif de transmission optique duobinaire selon l'une des revendications 1 à 3, dans lequel le modulateur de lumière sert, en outre, à transformer une phase de la porteuse de lumière.

5. Dispositif de transmission optique duobinaire selon l'une des revendications 1 à 4, dans lequel le modulateur d'intensité lumineuse est un modulateur d'intensité lumineuse double à coupe Z.

6. Dispositif de transmission optique duobinaire selon l'une des revendications 1 à 5, dans lequel le modulateur d'intensité lumineuse est un modulateur d'intensité lumineuse double à coupe X.

7. Procédé de transmission optique duobinaire comportant des étapes de mise en oeuvre du dispositif de transmission optique duobinaire selon l'une des revendications 1 à 6.
